# EUROPEAN PATENT APPLICATION

(11) **EP 4 497 356 A1**
(43) Date of publication of application: **29.01.2025**
(21) Application number: 22950155.6
(22) Date of filing: 04.07.2022
(51) Int. Cl.: A47K 13/26, F16B 21/07

(54) **ATTACHMENT/DETACHMENT DEVICE**

(71) Applicant: TOK, Inc., Tokyo 174-8501 (JP)
(72) Inventor: YOSHIOKA, Shinichi, Tokyo 174-8501 (JP)
(74) Representative: Schäfer, Matthias W.
(86) International application number: PCT/JP2022/026618
(87) International publication number: WO 2024/009360

(57) **Abstract**

To provide an attachment/detachment device adapted to be able to perform detachment work even without continuing to press an unlocking button by hand when a pin needs to be detached from a case such as a fixing part. An attachment/detachment device 10 including a pin 11, a case 15, and an operation button 13, in which the operation button 13 is provided with a pair of elastically deformable control pieces 13b respectively provided with locking claw parts 20a oppositely arranged with a smaller gap than an outer diameter of a contact part 11b in the pin 11 and unlocking claw parts 20b oppositely arranged with a gap equivalent to the outer diameter of the contact part 11b in the pin 11, and is provided to be slidably movable to a "locking position" where the locking claw parts 20a correspond to a pin insertion hole 14 in the case 15 and an "unlocking position" where the unlocking claw parts 20b correspond to the pin insertion hole 14.

## Description

### Technical Field

The present invention relates to an attachment/detachment device, and for example, relates to an attachment/detachment device suitable for detachably attaching a toilet seat to a toilet bowl of a toilet.

### Background Art

For example, Patent Literature 1 discloses an attachment/detachment mechanism capable of attaching and detaching a toilet seat and a toilet cover to and from a toilet bowl of a toilet. The attachment/detachment mechanism includes a fixing part to be attached to the toilet bowl and an attachment/detachment part provided in a hinge device to be attached to the toilet seat and the toilet cover. The fixing part is provided with a pin having a groove formed therein in a circumferential direction. On the other hand, the attachment/detachment part includes a case, a shaft arranged in the case and being slidable with respect to the case, a spring that urges the shaft in a predetermined direction, and a button that pushes the shaft against an urging force of the spring. An insertion hole into which the above-described pin is inserted is formed in the case.

When the toilet seat and the toilet cover are attached to the toilet bowl, the pin in the fixing part is inserted from the insertion hole of the case. At this time, the shaft slides against the urging force of the spring with a force for pushing the pin. When the pin and the shaft are in a predetermined positional relationship, the shaft is pushed back to its original orientation with the urging force of the spring, and a portion of the shaft enters the groove formed in the pin. Thus, the pin inserted into the insertion hole is locked, and the fixing part and the attachment/detachment part are locked to each other.

On the other hand, when the fixing part and the attachment/detachment part are detached from each other in order to detach the toilet seat and the toilet cover from the toilet bowl, the above-described button is pushed against the urging force of the spring. Therefore, the portion of the shaft that has entered the groove in the pin comes off the groove. Accordingly, a pin locked state is released, whereby the pin can be pulled out of the insertion hole. Thus, the attachment/detachment part can be detached from the fixing part.

### Citation List

### Patent Literature

Patent Literature 1: European Patent Publication No. 2324745

### Summary of Invention

### Technical Problem

In an invention disclosed in Patent Literature 1, in order to detach the toilet seat and the toilet cover from the toilet bowl, for example, the pin needs to be detached from the fixing part. However, in the case, an unlocking button continues to be pressed by hand against the urging force of the spring, and further the toilet seat and the toilet cover need to be lifted to pull out and detach the pin from the fixing part. Accordingly, there has been a problem of poor workability.

When the pin needs to be detached from the case such as the fixing part, there occurs a technical problem to be solved to be able to perform detachment work even without continuing to press the unlocking button by hand. The present invention has as its object to solve this problem.

### Solution to Problem

The present invention has been proposed to attain the above-described object, and the claimed invention set forth in Claim 1 provides an attachment/detachment device including a pin, a case, and an operation button, in which the pin includes, in an order from an insertion end side, a guide part formed in a conical shape toward the insertion end side, a contact part having a columnar shape, and an annular locking groove formed on an outer peripheral surface of the pin, the case includes an operation button insertion space formed in the case along an axis of the case from one end side toward the other end side of the case, and a pin insertion hole leading into the operation button insertion space from an outer peripheral surface of the case, and the operation button includes an externally operable button main body part a portion of which is arranged slidably along the axis in the operation button insertion space, and a pair of elastically deformable control pieces each fixed to the button main body part on the operation button insertion space side and respectively provided with locking claw parts oppositely arranged with a smaller gap than an outer diameter of the contact part and unlocking claw parts oppositely arranged with a gap for holding an outer peripheral surface of the contact part outside the locking groove, the operation button being provided to be slidably movable to a locking position where the locking claw parts correspond to the pin insertion hole and an unlocking position where the unlocking claw parts correspond to the pin insertion hole, and further includes a hook part that locks the operation button at the locking position when the locking claw parts move to the locking position.

According to this configuration, in order to change from a locked state where the operation button is arranged at the locking position and the locking claw parts are engaged with the locking groove in the pin to an unlocked state by releasing engagement between the pin and the case, the button main body part is pushed from outside to move the operation button to the unlocking position. Accordingly, the pair of control pieces in the operation button, together with the operation button main body part, is moved to the unlocking position. When the pair of control pieces is moved to the unlocking position, the locking claw parts come off the locking groove in the pin, and the unlocking claw parts correspond to the outer peripheral surface of the contact part in the pin and can hold the outer peripheral surface of the contact part. As a result, when the engagement between the case and the pin needs to be released, it is possible to detach the pin and the case from each other by releasing coupling therebetween even without continuing to press the operation button for unlocking by hand.

In the configuration set forth in Claim 1, the claimed invention set forth in Claim 2 provides the attachment/detachment device, in which the case further includes a slot part that restricts movement of the operation button and locks the hook part when the operation button moves to the locking position simultaneously with the pair of control pieces.

According to this configuration, when the movement of the operation button is restricted in a longitudinal direction, that is a front-rear direction, of the case and the operation button is moved to the locking position to achieve engagement between the pin and the case, at the same time, the hook part is locked to one end of the slot part so that the operation button, together with the pair of control pieces, can be held at the locking position.

In the configuration set forth in Claim 1 or 2, the claimed invention set forth in Claim 3 provides the attachment/detachment device, in which spring means for moving and urging the operation button toward the locking position side is provided between the case and the operation button.

According to this configuration, when the operation button is restored from the unlocking position to the locking position upon releasing a force for pushing the operation button, the sprig means can be made to have an automatic locking function using an urging force of the spring means as a restoration force of the operation button.

In the configuration set forth in Claim 1, the claimed invention set forth in Claim 4 provides the attachment/detachment device, in which at least one of the control pieces in the pair of control pieces is provided with a guide inclined surface for pushing and enlarging a gap between control pieces of the pair of control pieces by elastically deforming the one control piece in a direction away from the other control piece in contact with the outer peripheral surface of the contact part when the operation button moves from the locking position to the unlocking position between the locking claw part and the unlocking claw part.

According to this configuration, when the operation button moves from the locking position to the unlocking position, the guide inclined surface provided in the control piece contacts the outer peripheral surface of the contact part in the lock pin, at least one of the control pieces is elastically deformed to separate from the other control piece, the gap between control pieces of the pair of control pieces is pushed and enlarged, and the contact part in the pin is arranged between the unlocking claw parts pushed and enlarged. Accordingly, the movement of the operation button from the locking position to the unlocking position can be smoothly performed.

In the configuration set forth in Claim 2, the claimed invention set forth in Claim 5 provides the attachment/detachment device, in which there is provided as the slot part a pair of slot parts respectively provided at opposite positions across the operation button insertion space, and there is provided as the hook part a pair of hook parts respectively corresponding to the slot parts.

According to this configuration, at the locking position, the paired hook parts are respectively locked to one ends of the paired slot parts, thereby enabling stable engagement.

In the configuration set forth in Claim 5, the claimed invention set forth in Claim 6 provides the attachment/detachment device, in which the case is provided with slits formed from an opening of the case toward the other end side of the case, respectively, on both left and right sides across the slot part.

This configuration makes it possible to enhance elasticity around the slot part and to make work for incorporating the operation button into the case easy.

### Advantageous Effect of the Invention

According to the present invention, when engagement between a pin and a case is released, if a button main body part is moved to an unlocking position, a pair of control pieces enters a state where unlocking claw parts, together with a button main body part, is moved to the unlocking position, and locking claw parts comes off a locking groove in the pin, and the unlocking claw parts correspond to an outer peripheral surface of a contact part in the pin to hold the outer peripheral surface of the contact part, thereby eliminating a binding of the pin by the pair of control pieces. At the same time, the operation button can be held at the unlocking position. Accordingly, when the coupling between the case and the pin needs to be released, it is possible to perform work for detaching the pin and the case from each other by releasing coupling therebetween even without continuing to press the operation button for unlocking by hand. This makes it possible to simplify work.

The attachment/detachment device has few components and can be constituted by three components, i.e., the pin, the case, and the operation button, resulting in a reduction in cost, whereby the device can be provided at low cost.

### Brief Description of Drawings

[Figure 1] Figure 1 illustrates, as an example of an attachment/detachment device according to an embodiment of the present invention, an example of a case where a toilet seat is attached to and detached from a fixing part to be fixed to a toilet bowl of a toilet, where (a) is a diagram illustrating a state before coupling, (b) is a diagram illustrating a state before coupling, and (c) is a partially enlarged view of (a).
[Figure 2] Figure 2 is a top view of the attachment/detachment device.
[Figure 3] Figure 3 illustrates the attachment/detachment device in a state where a pin and an attachment/detachment part are coupled to each other, where (a) is its external perspective view, and (b) is a cross sectional view taken along a line A - A illustrated in (a).
[Figure 4] Figure 4 is a diagram illustrating an internal structure of the attachment/detachment device with a case fractured.
[Figure 5] Figure 5 is an exploded perspective view of the attachment/detachment device.
[Figure 6] Figure 6 is a plan view of an operation button in the attachment/detachment device.
[Figure 7] Figure 7 is a perspective view of the operation button in the attachment/detachment device, where (a) is a diagram as viewed from the upper side, and (b) is a diagram as viewed from the lower side.
[Figure 8] Figure 8 is a diagram illustrating a mounting operation of the attachment/detachment device, and is a plan view illustrating the attachment/detachment device in a state where the operation button is moved to a locking position.
[Figure 9] Figure 9 is a diagram illustrating a mounting operation of the attachment/detachment device, and is a perspective view illustrating an engaged state of a pin by the operation button.
[Figure 10] Figure 10 is a diagram illustrating an operation at the time of coupling of the attachment/detachment device, and is a side view illustrating an arrangement position of the operation button and the pin.
[Figure 11] Figure 11 is a diagram illustrating a mounting operation of the attachment/detachment device, and is a plan view illustrating the attachment/detachment device in a state where the operation button is moved to an unlocking position.
[Figure 12] Figure 12 is a diagram illustrating a state at the time of detachment of the attachment/detachment device, and is a perspective view illustrating an engaged state of the pin by the operation button.
[Figure 13] Figure 13 is a diagram illustrating a state at the time of detachment of the attachment/detachment device, and is a side view illustrating an arrangement position of the operation button and the pin.

### Description of Embodiment

In order to attain an object to provide an attachment/detachment device adapted to be able to perform detachment work even without pressing an unlocking button by hand when a pin needs to be detached from a case such as a fixing part, the present invention provides an attachment/detachment device including a pin, a case, and an operation button, which is implemented by being configured such that the pin includes, in an order from an insertion end side, a guide part formed in a conical shape toward the insertion end side, a contact part having a columnar shape, and an annular locking groove formed on an outer peripheral surface of the pin, the case includes an operation button insertion space formed in the case along an axis of the case from one end side toward the other end side of the case, and a pin insertion hole leading into the operation button insertion space from an outer peripheral surface of the case, and the operation button includes an externally operable button main body part a portion of which is arranged slidably along the axis in the operation button insertion space, and a pair of elastically deformable control pieces each fixed to the button main body part on the operation button insertion space side and respectively provided with locking claw parts oppositely arranged with a smaller gap than an outer diameter of the contact part and unlocking claw parts oppositely arranged with a gap for holding an outer peripheral surface of the contact part outside the locking groove, the operation button being provided to be slidably movable to a locking position where the locking claw parts correspond to the pin insertion hole and an unlocking position where the unlocking claw parts correspond to the pin insertion hole, and further includes a hook part that locks the operation button at the locking position when the locking claw parts move to the locking position.

### Examples

Examples of an embodiment of the present invention will be described in detail below with reference to the accompanying drawings. In the following examples, when reference is made to the number of components or a numerical value, amount, range, or the like of each of the components, the number or the like is not limited to a specific number but may be the specific number or more or the specific number or less unless otherwise stated or except when expressly limited to the specific number in principle.

When reference is made to a shape of each of components and a positional relationship among the components, a substantially approximate or similar shape or the like is included unless otherwise stated or except when considered to be expressly excluded in principle.

In the drawings, characteristic portions may be exaggerated by being enlarged, for example, in order to facilitate the understanding of features, and a dimension ratio or the like of each of components is not necessarily the same as an actual one. In a cross-sectional view, hatching of some of the components may be omitted in order to facilitate the understanding of a cross-sectional structure of the components.

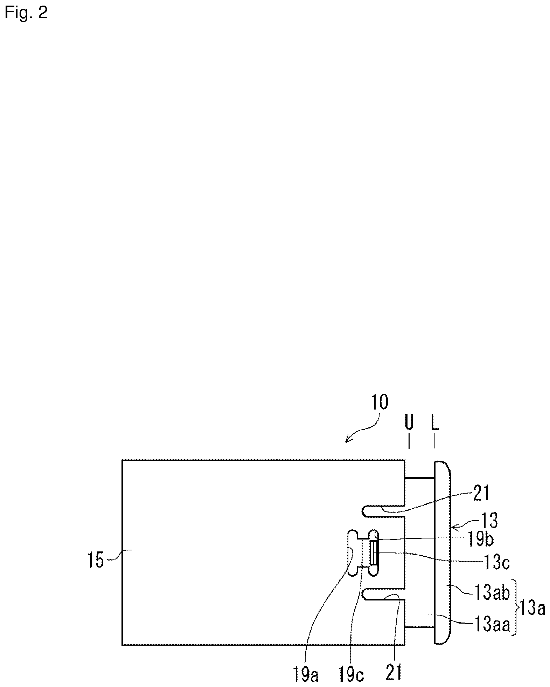

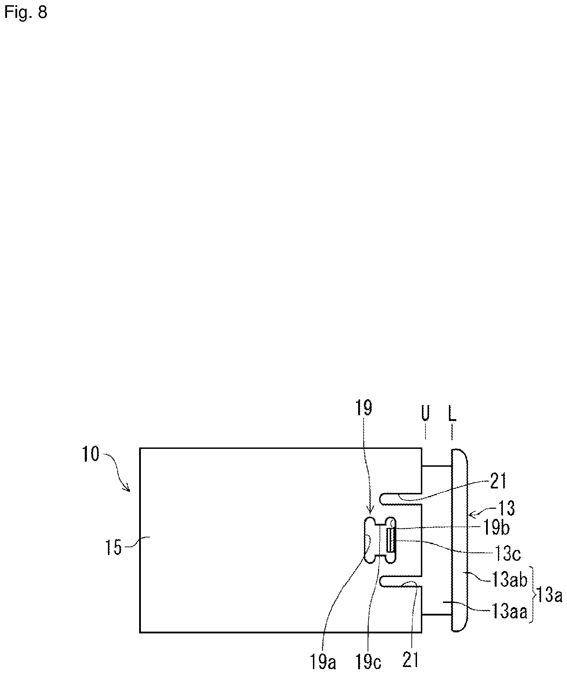

In the following description, terms representing directions such as up-down and left-right directions are not absolute, but are appropriate if each of parts in an attachment/detachment device according to the present invention is in a depicted orientation. However, if the orientation has changed, the terms should be construed by being changed depending on the change in the orientation. Throughout the entire description of the examples, the same elements are respectively denoted by the same reference signs. In Figures 2, 8, 10, 11, and 13, a position with reference sign L indicates a position of a touch operation part 13a when an operation button 13 is arranged at a "locking position" described below, and a position with reference sign U indicates a position of the touch operation part 13ab when the operation button 13 is arranged at an "unlocking position" similarly described.

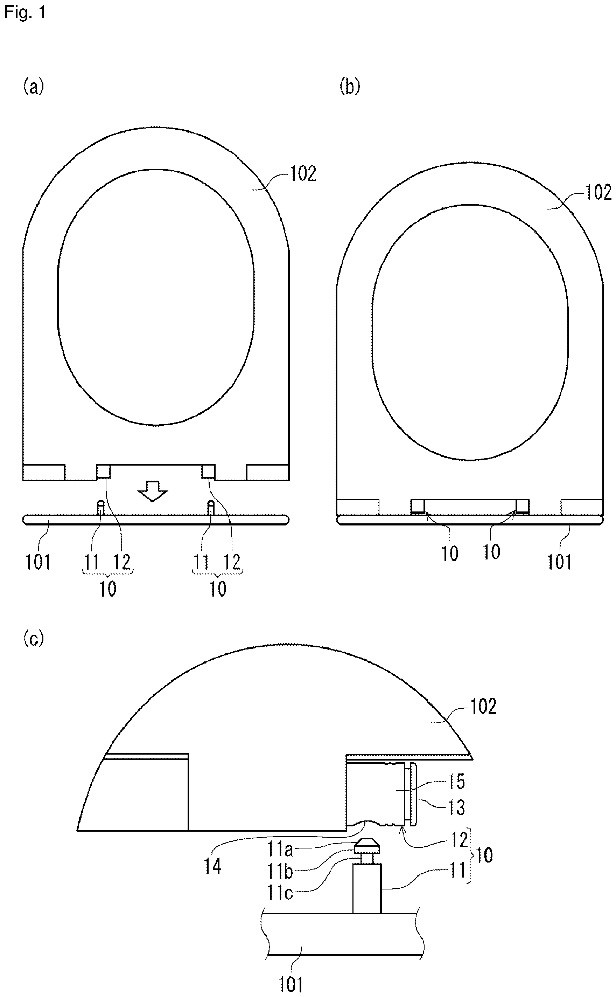

Figure 1 illustrates, as an embodiment of an attachment/detachment device 10 according to the present invention, a case where a toilet seat 102 is attached to and detached from a fixing part to be fixed to a toilet bowl of a toilet as an example, where (a) is a diagram illustrating a state before coupling, (b) is a diagram illustrating a state after coupling, and (c) is a partially enlarged view of (a).

In Figure 1, the attachment/detachment device 10 includes a pin 11 fixed to a fixing part 101 to be attached to a toilet bowl (not illustrated) and protruding from the fixing part 101 and an attachment/detachment part 12 attached to the toilet seat 102 by turning a hinge mechanism not illustrated. When the pin 11 is inserted into the attachment/detachment part 12 attached to the toilet seat 102 from a pin insertion hole 14 with an operation button 13 arranged at an unlocking position described below, as illustrated in (a) and (c) in Figure 1, the pin 11 and the attachment/detachment part 12 are engaged with and locked to each other, whereby the toilet seat 102 can be attached to the fixing part 101 (the toilet bowl side), as illustrated in (b). On the other hand, when the toilet seat 102 is detached from the fixing part 101, if the toilet seat 102 side, for example, is lifted, and the pin 11 is removed from the attachment/detachment part 12 with the operation button 13 provided in the attachment/detachment part 12 pushed into and arranged at the unlocking position described below, the toilet seat 102 can be detached from the fixing part 101.

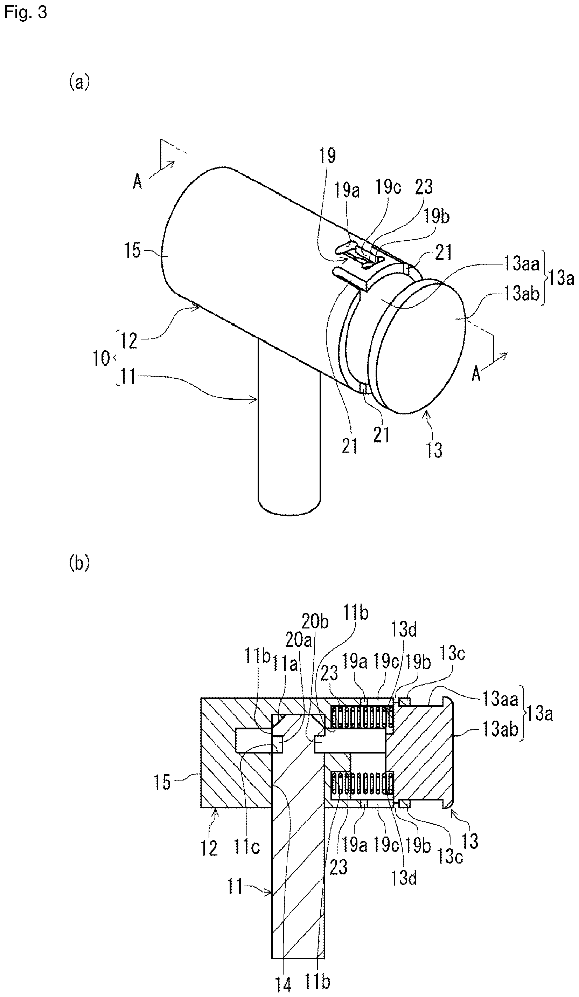

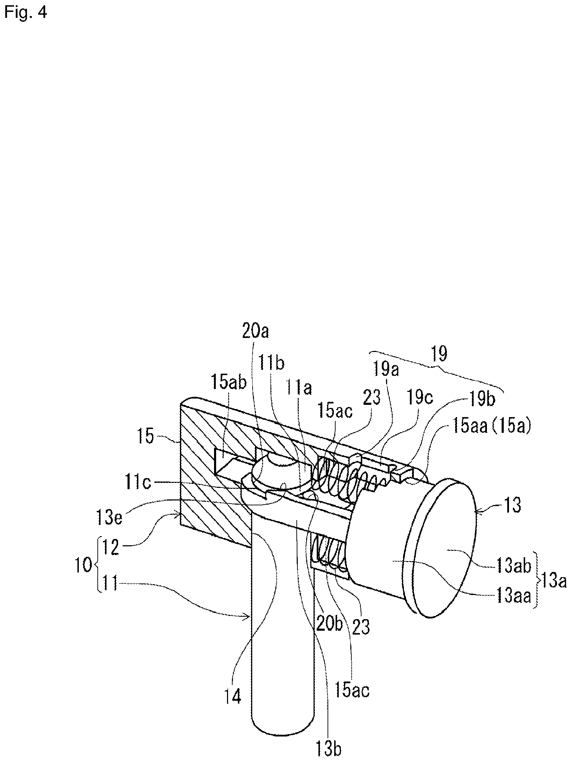

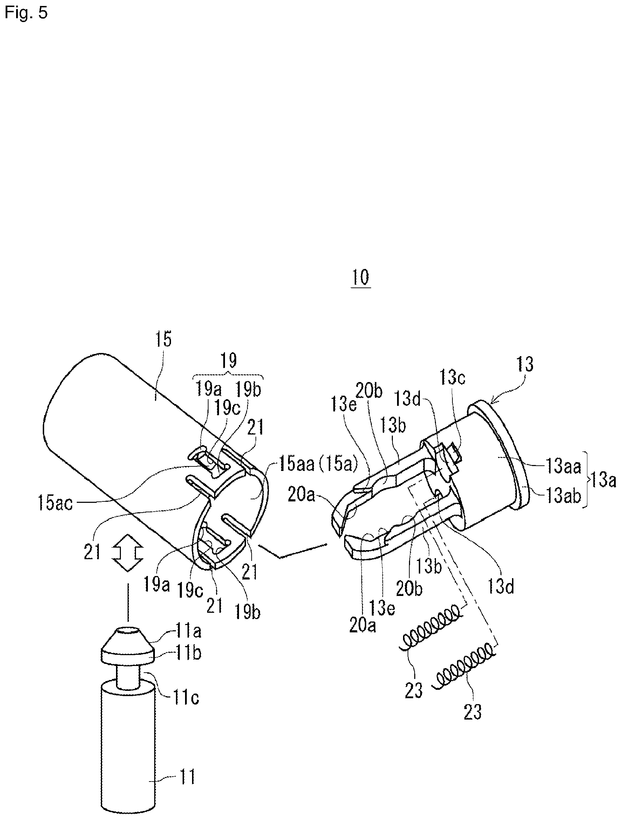

Figures 2 to 5 illustrate a structure of the attachment/detachment device 10 alone. Figure 2 is a top view of the attachment/detachment device 10, Figure 3 illustrates the attachment/detachment device 10 in a state where the pin 11 and the attachment/detachment part 12 are coupled to each other, where (a) is its external perspective view and (b) is a cross-sectional view taken along a line A - A illustrated in (a), Figure 4 is a diagram illustrating an internal structure of the attachment/detachment device 10 with a case 15 fractured, and Figure 5 is an exploded perspective view of the attachment/detachment device 10.

In Figures 2 to 5, the attachment/detachment device 10 includes the pin 11 and the attachment/detachment part 12. The attachment/detachment part 12 includes the case 15, the operation button 13, and a coil springs 23.

The pin 11 is a columnar member that is circular in horizontal cross section, and is formed of a metal, a resin material, or the like. The pin 11 includes, in an order from an insertion end side on which it is inserted into the case 15 in the attachment/detachment part 12, a guide part 11a formed in a so-called conical shape, the external dimensions of which gradually decrease toward the insertion end side, a contact part 11b having a columnar shape, and an annular locking groove 11c circumferentially formed on an outer peripheral surface of the pin 11. The diameter of the columnar contact part 11b is made equal to or slightly smaller than the outer diameter on the proximal end side of the pin 11.

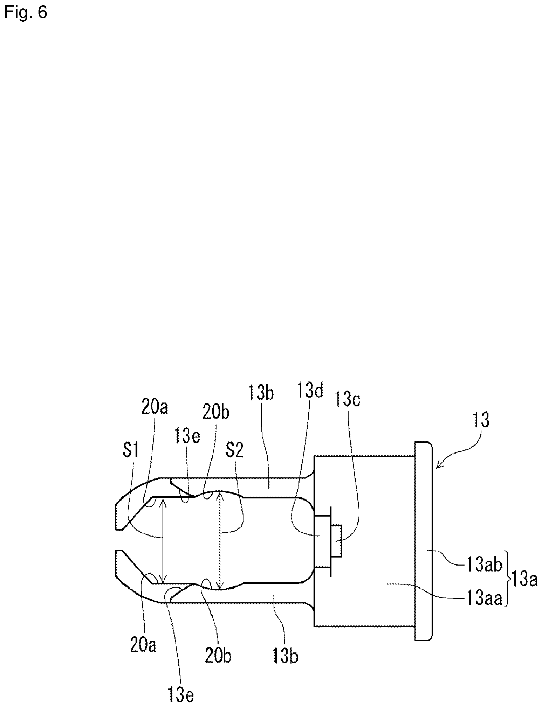

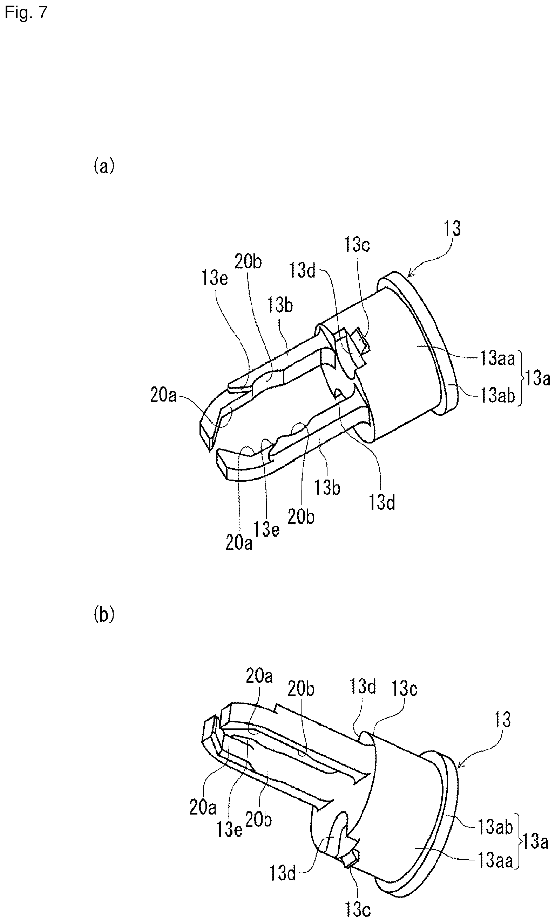

The operation button 13 is formed of a resin material, and is also illustrated alone in Figures 6 and 7. A structure of the operation button 13 will be described in more detail with reference to Figures 6 and 7 in addition to Figures 2 and 5.

The operation button 13 integrally includes a button main body part 13a, a pair of control pieces 13b, a locking claws 13c, and a spring positioning recesses 13d.

The button main body part 13a includes a columnar sliding part 13aa and a touch operation part 13ab formed integrally with the sliding part 13aa. The sliding part 13aa has an outer diameter substantially equal to the inner diameter of an operation button insertion space 15a described below in the case 15, and is slidably arranged in the operation button insertion space 15a. On the other hand, the outer diameter of the touch operation part 13ab is made larger than the inner diameter of the operation button insertion space 15a and substantially equal to the outer diameter of the case 15.

The pair of control pieces 13b is formed in a state protruding at a substantially right angle from a surface on the opposite side to a surface, which is provided with the touch operation part 13ab, of the sliding part 13aa and horizontally toward the operation button insertion space 15a side, and is formed such that the paired control pieces 13b are parallel to face each other. Each of the control pieces 13b is deformably formed by having elasticity, is provided with an unlocking claw part 20b and a locking claw part 20a in an order from the sliding part 13aa side, and further has a guide inclined surface 13e formed therein between the unlocking claw part 20b and the locking claw part 20a.

In the pair of control pieces 13b, a gap S1 between the locking claw parts 20a is set smaller than the outer diameter of the contact part 11b in the pin 11 and larger than the outer diameter of the locking groove 11c as illustrated in Figure 6, and a gap S2 between the unlocking claw parts 20b is set equal to or smaller than the outer diameter of the contact part 11b and larger than S1. The unlocking claw part 20b is set to have a circular arc shape equivalent to the outer diameter of the contact part 11b.

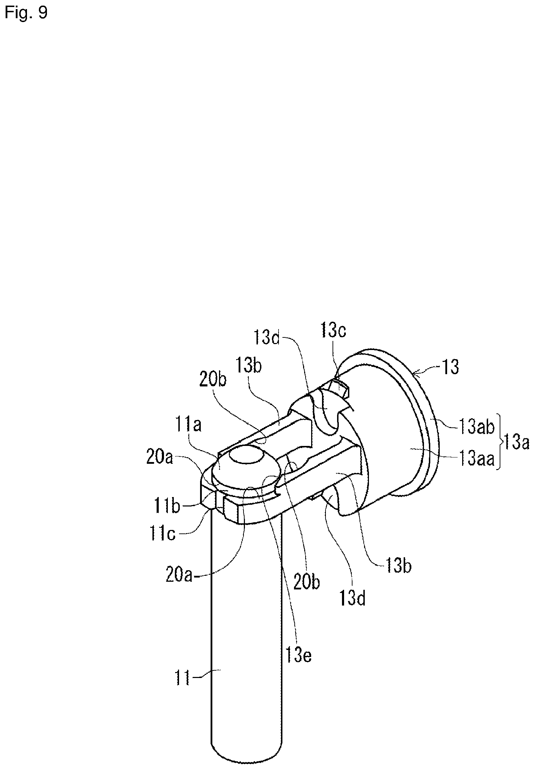

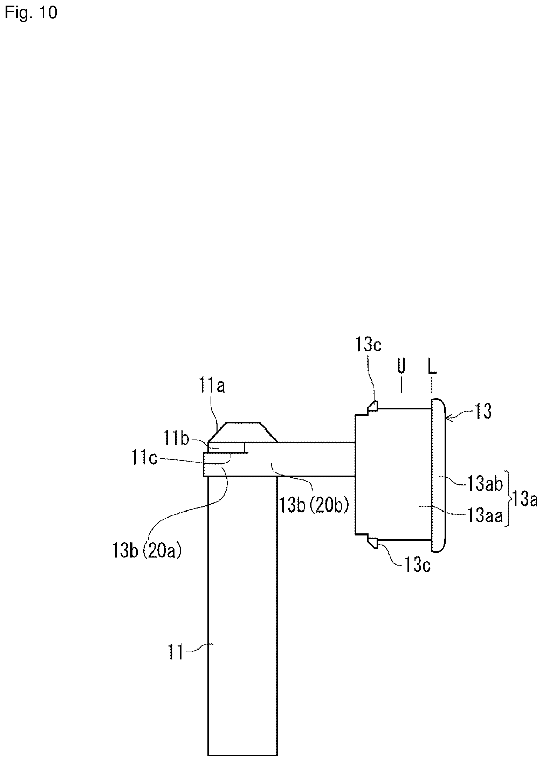

The thickness of the locking claw part 20a provided in each of the control pieces 13b (the thickness in an insertion direction of the pin 11) is a thickness in which the locking claw parts 20a enter the locking groove 11c in the pin 11 and can be engaged with and locked into the locking groove 11c when the pin 11 is arranged at an engagement position, in the pin insertion hole 14 described below, of the case 15 (see Figures 9 and 10). The above-described gap S1 between the locking claw parts 20a is of a size in which the locking claw parts 20a in the pair of control pieces 13b enter the locking groove 11c and can be engaged with and locked into the pin 11 when the pin 11 is inserted into and arranged at a final position in the pin insertion hole 14 (also see Figures 9 and 10).

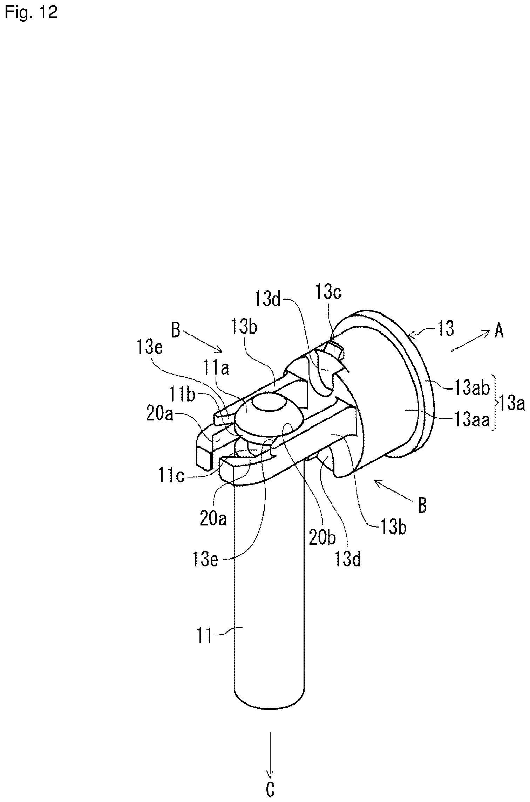

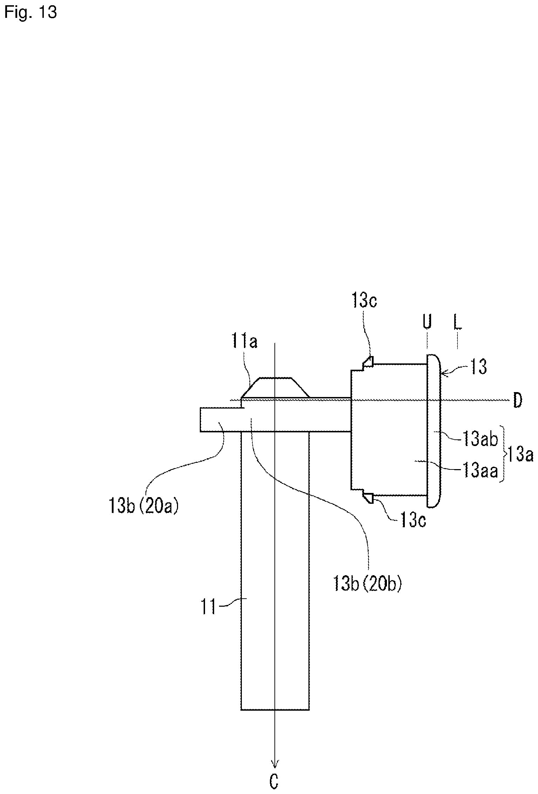

On the other hand, the thickness of the unlocking claw part 20b provided in each of the control pieces 13b (also the thickness in the insertion direction of the pin 11) is a thickness in which the unlocking claw part 20b is arranged astride the locking groove 11c and the contact part 11b in the pin 11 when the pin 11 is arranged at the engagement position, in the pin insertion hole 14 described below, of the case 15 (see Figures 12 and 13). The above-described gap S2 between the unlocking claw parts 20b is such that an outer peripheral surface of the contact part 11b is sandwiched between the unlocking claw parts 20b in the pair of control pieces 13b to hold the pin 11 when the pin 11 is inserted into and arranged at the final position in the pin insertion hole 14 (also see Figures 12 and 13). At this time, the operation button 13 is bound in a longitudinal direction (a direction along an axis of the case 15) from one end side (the side on which the operation button 13 is inserted) of the case 15 toward the other end side thereof, and can be moved with a light force in a direction in which the pin 11 is removed and inserted (a direction perpendicular to the axis of the case 15).

The guide inclined surface 13e is formed at a position corresponding to the outer peripheral surface of the contact part 11b in the pin 11 when the pin 11 is arranged at the engagement position, in the pin insertion hole 14 described below, of the case 15 between a terminal end portion of the locking claw part 20a and a start end portion of the unlocking claw part 20b in each of the control pieces 13b. The guide inclined surface 13e has an inclination formed in such a state that its surface on the locking claw part 20a side is positioned outermost, projects inward toward the unlocking claw part 20b side, is connected to the unlocking claw part 20b, and is continuously inclined from the locking claw part 20a side toward the unlocking claw part 20b side, as illustrated in Figures 5, 6, and 7.

The guide inclined surfaces 13e contact the outer peripheral surface of the contact part 11b in the pin 11 when the operation button 13 is arranged at a "locking position" described below and is moved toward an "unlocking position" side from a locked state where the locking claw parts 20a enter the locking groove 11c in the pin 11 and are engaged with the inside of the locking groove 11c to prevent the pin 11 from coming off, and serve to respectively elastically deform the control pieces 13b in outward directions (directions in which the gap S1 and the gap S2 are enlarged) to enlarge the gap S1 and the gap S2 and to guide the contact part 11b into the unlocking claw parts 20b.

The button main body part 13a is provided with the locking claw 13c as hook means between an outer peripheral surface and a front surface, which is connected to the pair of control pieces 13b, of the sliding part 13aa and the touch operation part 13ab on the opposite side thereof. As the locking claw 13c, there is a pair of locking claws 13c positioned at a substantial center between the paired control pieces 13b, respectively formed at positions displaced from each other by 180 degrees, and provided in a convex shape from the outer peripheral surface of the sliding part 13aa.

As the spring positioning recess 13d, there is a pair of spring positioning recesses 13d provided to respectively correspond to the locking claws 13c provided on the outer peripheral surface of the sliding part 13aa and over a range from the front surface of the sliding part 13aa on the opposite side to the touch operation part 13ab to a position just short of the locking claws 13c. Therefore, the paired spring positioning recesses 13d are also positioned at a substantial center between the paired control pieces 13d and are respectively formed at positions displaced from each other by 180 degrees. The paired spring positioning recesses 13d are opened in a recessed groove shape over the front surface and the outer peripheral surface of the sliding part 13aa.

The case 15 is formed of a resin material. When described with reference to Figures 2 to 4, the case 15 has the operation button insertion space 15a provided in its inner portion. The operation button insertion space 15a is formed in the longitudinal direction (the direction along the axis of the case 15) from the one end side (the side on which the operation button 13 is inserted) of the case 15 toward the other end side thereof, and is opened on the one end side. The case 15 is provided with the pin insertion hole 14 leading into the operation button insertion space 15a from its outer peripheral surface and slots 19 that restrict an operation of the operation button 13.

More specifically, the operation button insertion space 15a is provided with a sliding part housing space 15aa composed of a circular space that houses the sliding part 13aa in the operation button 13 slidably in the longitudinal direction, i.e., a front-rear direction, of the case 15, a control piece housing space 15ab that houses the pair of control pieces 13b slidably in the same longitudinal direction, and a pair of spring housing spaces 15ac where coil springs 23 are respectively housed and arranged. The control piece housing space 15ab and the spring housing spaces 15ac are continuously provided from inside the sliding part housing space 15aa.

The slots 19 respectively correspond to the locking claws 13c provided in the sliding part 13aa in the operation button 13, and are formed in the longitudinal direction (the direction along the axis) of the case 15 from the opening end side (rear end side) thereof in a longitudinal direction in which the locking claws 13c, together with the sliding part 13aa, move in the operation button insertion space 15a. The locking claws 13c are respectively arranged in the slots 19. As a result, the operation button 13 is restricted to an operation in only a longitudinal direction of a region of the slot 19. In the present embodiment, the width of the slot 19 is set larger than the left-right width of the locking claw 13c. The case 15 has a pair of slits 21 provided therein substantially parallel to the slot 19 from an opening of the case 15 toward the other end side of the case 15 on both left and right sides across the slot 19. The pair of slits 21 provided around the slot 19 increases elasticity around the slot 19. As a result, when the operation button 13 including the convex-shaped locking claws 13c is incorporated into the case 15, the operation button 13 can be easily incorporated by elastic deformation around the slot 19. In the present embodiment, the slot 19 is formed of a through hole leading into the operation button insertion space 15a from the outer peripheral surface of the case 15, but may be formed of not the through hole but a recessed groove or the like.

The sliding part housing space 15aa guides movement of the sliding part 13aa in the operation button 13 within the case 15, and is formed with an inner diameter substantially equal to the outer diameter of the sliding part 13aa.

The control piece housing space 15ab guides movement in a front-rear direction (a push-in/push-out direction) of the pair of control pieces 13b, the left-right width thereof is slightly larger than the left-right outer width of the pair of control pieces 13b, and the pair of control pieces 13b is elastically deformed in a left-right direction, thereby ensuring a space where the contact part 11b in the pin 11 can be arranged between the paired control pieces 13b.

The paired spring housing spaces 15ac are respectively spaces provided to correspond to the spring positioning recesses 13d provided in the button main body part 13a in the operation button 13 and for positioning and holding the coil springs 23 of a compression type as spring means arranged between the case 15 and the button main body part 13a.

The pin insertion hole 14 is a hole having an inner diameter with which the pin 11 is insertable, and is arrayed at a position perpendicularly corresponding to the locking claw parts 20a, when the pair of control pieces 13b in the operation button 13 is arranged at the "locking position". On the other hand, when the pair of control pieces 13b in the operation button 13 is arranged at the "unlocking position", the pin insertion hole 14 is arrayed at a position perpendicularly corresponding to the unlocking claw parts 20b.

In the attachment/detachment device 10 thus configured, the operation button 13 is inserted into the attachment/detachment part 12 from the opening side of the case 15. In the case, the control pieces 13b are arranged in the control piece housing space 15ab, and the paired coil springs 23 as the spring means are respectively arranged in a compressed state in the spring housing spaces 15ac. Further, the sliding part 13aa is arranged in the sliding part housing space 15aa. The coil spring 23 may not necessarily be the coil spring 23 as long as it is a spring material that moves and urges the operation button 13 toward the "locking position" side.

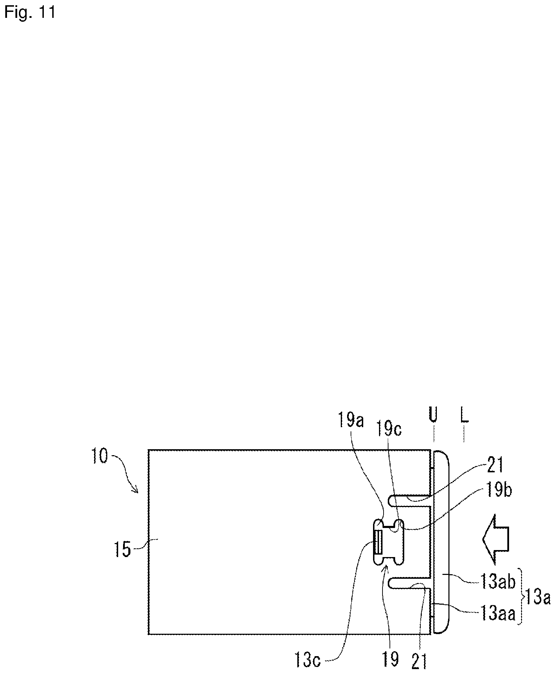

A state in a case where the locking claw 13c of the touch operation part 13ab is locked to one end of the slot 19 within the sliding part housing space 15aa, that is, in a case where a portion of the sliding part 13aa in the operation button 13, together with the button main body part 13a, greatly protrudes outward from one end of the case 15, as illustrated in Figures 2 to 4 and Figures 8 to 10, is a state where the operation button 13 is arranged at the "locking position". On the other hand, a state in a case where the locking claw 13c of the touch operation part 13ab is positioned at the other end of the slot 19 within the sliding part housing space 15aa, that is, a case where the sliding part 13aa in the operation button 13 is pushed into the case 15 so that the button main body part 13a substantially adheres to one end of the case 15 and the pin insertion hole 14 and the unlocking claw parts 20b perpendicularly corresponding to each other, as illustrated in Figures 11 to 13, is a state where the operation button 13 is arranged at the "unlocking position".

Then, an operation of the attachment/detachment device 10 thus configured will be described with reference to Figures 2 to 4 and Figures 8 to 13.

When the pin 11 and the attachment/detachment part 12 are coupled to each other (see Figures 2 to 4 and Figures 8 to 10):
When the pin 11 and the attachment/detachment part 12 are coupled to each other, the pin 11 is inserted into the case 15 from the guide part 11a side through the pin insertion hole 14 in a state where the operation button 13 greatly protrudes from inside the case 15, i.e., a state where the operation button 13 is arranged at the "locking position", as illustrated in Figures 2 to 4 and Figures 8 to 10. When the pin 11 is inserted into respective positions of the pair of control pieces 13b, the guide part 11a strikes respective lower edges of the locking claw parts 20a in the pair of control pieces 13b. When the guide part 11a strikes the respective lower edges of the locking claw parts 20a, the pair of control pieces 13b is each pushed upward (in a movement direction of the guide part 11a), and the pair of control pieces 13b is each pushed and enlarged outward in a left-right direction. A distal end of the pin 11 enters the case 15 until it strikes a wall in the case 15 while the contact part 11b is interposed between the locking claw parts 20a in the pair of control pieces 13b. When the distal end of the pin 11 strikes the wall in the case 15, the guide part 11a also finishes passing between the locking claw parts 20a, and the locking claw parts 20a in the pair of control pieces 13b correspond to the locking groove 11c. Elastic energy stored in the pair of control pieces 13b is released, and the pair of control pieces 13b returns to its original shape. As a result, the locking claw parts 20a enter the locking groove 11c to enter an engaged/locked state, that is, to be automatically locked with an elastic restoration force of the pair of control pieces 13b. Such a locked state is a state where the sliding part 13aa in the operation button 13, together with the touch operation part 13ab, protrudes from the case 15, as illustrated in Figures 2 to 4 and Figure 8.

When the pin 11 and the attachment/detachment part 12 are detached from each other (see Figures 11 to 13):
When the pin 11 and the attachment/detachment part 12 are detached from each other, the touch operation part 13ab protruding from the case 15 illustrated in Figures 2 to 4 and Figure 8 is pushed into the case 15. Accordingly, the entire operation button 13 at the "locking position" moves toward the "unlocking position" side while compressing the coil springs 23.

When the touch operation part 13ab moves toward the inside of the case 15, the guide inclined surfaces 13e formed in a state of being continuously inclined from the locking claw part 20a side toward the unlocking claw part 20b side contact the contact part 11b in the pin 11. As the operation button 13 moves to the "unlocking position", the paired control pieces 13b are further spaced apart from each other, and the locking claw parts 20b also come off the locking groove 11c. When the movement of the operation button 13 further progresses while the contact part 11b is interposed between the paired control pieces 13b. When the operation button 13 finishes moving to the "unlocking position", the unlocking claw parts 20b in the pair of control pieces 13b respectively correspond to positions corresponding to the contact part 11b. As illustrated in Figures 12 and 13, the unlocking claw parts 20b loosely contact the outer peripheral surface of the contact part 11b in the pin 11 without entering the locking groove 11c, to sandwich the outer peripheral surface of the contact part 11b with the pin 11 not bound. As a result, locking to the pin 11 is released. When the operation button 13 is arranged at the "unlocking position", the operation button 13 is held at the "unlocking position" with a maximum spring force of the coil springs 23 stored. Here, a sandwiching force of the unlocking claw parts 20b in the pair of control pieces 13b is set larger than the spring force of the coil springs 23. This prevents the operation button 13 from moving toward the "locking position" side.

When the operation button 13 is held at the "unlocking position" where the pin 11 is unlocked, if the pin 11 or the attachment/detachment part 12 is moved in an axial direction of the pin 11, the pin 11 can easily be pulled out of the pin insertion hole 14 so that the pin 11 and the attachment/detachment part 12 can be detached from each other. Here, the spring force of the coil springs 23 and the sandwiching force of the unlocking claw parts 20b in the pair of control pieces 13b are exerted on a surface indicated by reference sign D (hereinafter referred to as a D surface) in Figure 13 in directions indicated by an arrow A and an arrow B in Figure 12. A force for moving the pin 11 or the attachment/detachment part 12 in the axial direction of the pin 11 (in a direction indicated by an arrow C in Figure 12) is perpendicular to the D surface, and there is also no site where the contact part 11b and the unlocking claw parts 20b are locked to each other. Accordingly, the pin 11 can be pulled out of the pin insertion hole 14 with a light force so that the pin 11 and the attachment/detachment part 12 can be detached from each other.

When the pin 11 is pulled out of the pin insertion hole 14, the operation button 13 is returned to the "locking position" where the locking claw 13c in the button main body part 13a and one end of the slot 19 are locked to each other with a spring force so far stored in the coil springs 23. Again, the pin 11 is inserted into and coupled to the pin insertion hole 14.

Therefore, with the attachment/detachment device 10 having the configuration according to the present embodiment, when the pin 11 and the case 15 as the attachment/detachment part 12 are coupled to each other, if the pin 11 is inserted into the pin insertion hole 14 in the case 15 with the operation button 13 as the button main body part arranged at the "locking position", the locking claw parts 20a in the pair of control pieces 13b escape outward once to permit insertion. If the pin 11 is inserted into a predetermined position, the locking claw parts 20a are automatically engaged with and locked into the locking groove 11c in the pin 11 so that the pin 11 can be automatically locked. As a result, when the pin 11 and the attachment/detachment part 12 are coupled to each other, the pin 11 can be locked simultaneously with being coupled only by being inserted into the pin insertion hole 14 in the case 15 even without the operation button 13 being operated by hand, thereby making it possible to simplify work.

On the other hand, when engagement between the pin 11 and the case 15 as the attachment/detachment part 12 is released, if the operation button 13 as the button main body part is pushed into the case 15 and moved to the "unlocking position", the unlocking claw parts 20b in the pair of control pieces 13b, together with the operation button 13, are moved to the "unlocking position". At this time, although engagement between the locking claw parts 20a in the pair of control pieces 13b and the locking groove 11c is released. However, the outer peripheral surface of the contact part 11b is sandwiched between the unlocking claw parts 20b in the pair of control pieces 13b, and the operation button 13 can be held at the "unlocking position". Accordingly, when the case 15 and the pin 11 need to be detached from each other, it is possible to perform detachment work even without continuing to press the operation button 13 for unlocking by hand, thereby making it possible to simplify work. When the pin 11 is detached, engagement and locking between the locking claw 13c and the unlocking part 19b is released with the spring force stored in the coil springs 23, and the operation button 13, together with the pair of control pieces 13b, is returned to the "locking position", thereby making it possible to further simplify work.

When the operation button 13 moves from the "locking position" to the "unlocking position", the guide inclined surfaces 13e provided in the control pieces 13b contact the outer peripheral surface of the contact part 11b in the pin 11, and the paired control pieces 13b are elastically deformed to separate from each other, to push and enlarge the gap between the control pieces of the pair of control pieces 13b, and the contact part 11b in the pin 11 is arranged between the unlocking claw parts 20b pushed and enlarged. Accordingly, the movement of the operation button 13 from the "locking position" to the "unlocking position" can be smoothly performed.

Although a structure in which the pair of control pieces 13b is provided is disclosed in the present embodiment, a structure in which the control piece 13b is provided on only at least one side can be used.

Although the coupling between the pin 11 protruding from the fixing part 101 to be attached to a toilet bowl (not illustrated) and the attachment/detachment part 12 to be attached to the toilet seat 102 via a hinge mechanism has been described as an example in the present embodiment, the present invention is not limited to attachment and detachment between the toilet bowl and the toilet seat, but is applicable as various types of attachment/detachment devices.

It should be understood that various modifications can be made without departing from the spirit of the prevent invention and the present invention covers the modifications.

### Reference Signs List

10: attachment/detachment device
11: pin
11a: guide part
11b: contact part
11c: locking groove
12: attachment/detachment part
13: operation button
13a: button main body part
13aa: sliding part
13ab: touch operation part
13b: control piece
13c: locking claw (hook part)
13d: spring positioning recess
13e: guide inclined surface
14: pin insertion hole
15: case
15a: operation button insertion space
15aa: sliding part housing space
15ab: control piece housing space
15ac: spring housing space
19: slot (slot part)
19a: locking part
19b: unlocking part
19c: slot part
20a: locking claw part
20b: unlocking claw part
21: slit
23: coil spring (spring means)
101: fixing part
102: toilet seat
S1: gap
S2: gap
A: arrow
B: arrow
C: arrow
D: surface
L: locking position
U: unlocking position

## Claims

1. An attachment/detachment device comprising a pin, a case, and an operation button, wherein
the pin includes, in an order from an insertion end side,
a guide part formed in a conical shape toward the insertion end side,
a contact part having a columnar shape, and
an annular locking groove formed on an outer peripheral surface of the pin,
the case includes
an operation button insertion space formed in the case along an axis of the case from one end side toward the other end side of the case, and
a pin insertion hole leading into the operation button insertion space from an outer peripheral surface of the case, and
the operation button includes
an externally operable button main body part a portion of which is arranged slidably along the axis in the operation button insertion space, and
a pair of elastically deformable control pieces each fixed to the button main body part on the operation button insertion space side and respectively provided with locking claw parts oppositely arranged with a smaller gap than an outer diameter of the contact part and unlocking claw parts oppositely arranged with a gap for holding an outer peripheral surface of the contact part outside the locking groove,
the operation button being provided to be slidably movable to a locking position where the locking claw parts correspond to the pin insertion hole and an unlocking position where the unlocking claw parts correspond to the pin insertion hole, and further includes
a hook part that locks the operation button at the locking position when the locking claw parts move to the locking position.

2. The attachment/detachment device according to claim 1, wherein the case further includes a slot part that restricts movement of the operation button and locks the hook part when the operation button moves to the locking position simultaneously with the pair of control pieces.

3. The attachment/detachment device according to claim 1 or 2, wherein spring means for moving and urging the operation button toward the locking position side is provided between the case and the operation button.

4. The attachment/detachment device according to claim 1, wherein at least one of the control pieces in the pair of control pieces is provided with a guide inclined surface for pushing and enlarging a gap between control pieces of the pair of control pieces by elastically deforming the one control piece in a direction away from the other control piece in contact with the outer peripheral surface of the contact part when the operation button moves from the locking position to the unlocking position between the locking claw part and the unlocking claw part.

5. The attachment/detachment device according to claim 2, wherein there is provided as the slot part a pair of slot parts respectively provided at opposite positions across the operation button insertion space, and there is provided as the hook part a pair of hook parts respectively corresponding to the slot parts.

6. The attachment/detachment device according to claim 5, wherein the case is provided with slits formed from an opening of the case toward the other end side of the case, respectively, on both left and right sides across the slot part.
